# EUROPÄISCHE PATENTSCHRIFT

(11) **EP 3 291 760 B1**
(45) Veröffentlichungstag und Bekanntmachung des Hinweises auf die Patenterteilung: **04.11.2020**
(21) Anmeldenummer: 16718687.3
(22) Anmeldetag: 26.04.2016
(51) Int. Cl.: A61C 13/265, A61C 13/103

(54) **VERFAHREN ZUR POSITIONIERUNG VON PROTHESENZÄHNEN IN EINER PROTHESENBASIS**
METHOD FOR POSITIONING PROSTHETIC TEETH IN A PROSTHETIC BASE
PROCÉDÉ DE POSITIONNEMENT DE DENTS PROTHÉTIQUES DANS UNE BASE DE PROTHÈSE

(30) Priorität: 05.05.2015 DE 102015107006
(43) Veröffentlichungstag der Anmeldung: 14.03.2018
(73) Patentinhaber: Kulzer GmbH, 63450 Hanau (DE)
(72) Erfinder: BÖHM, Uwe, 61350 Bad Homburg (DE)
(74) Vertreter: Schultheiss & Sterzel Patentanwälte PartG mbB
(86) Internationale Anmeldenummer: PCT/EP2016/059315
(87) Internationale Veröffentlichungsnummer: WO 2016/177605

(56) Entgegenhaltungen:
- WO-A1-2015/030166
- WO-A2-2010/021535
- DE-A1- 2 139 683
- DE-A1- 3 812 952
- DE-C- 464 497
- DE-U1- 8 708 671
- JP-A- 2008 212 586
- US-A- 2 328 575
- US-A1- 2012 178 050

## Beschreibung

Die Erfindung betrifft ein Verfahren zur Positionierung von Prothesenzähnen in einer Prothesenbasis beziehungsweise ein Verfahren zur Herstellung einer Dentalprothese sowie einen Prothesenzahn, eine Prothesenbasis und einen Satz Prothesenzähne zum Umsetzen des Verfahrens.

Die Erfindung betrifft somit die Positionierung und Befestigung von Prothesenzähnen in einer Prothesenbasis sowie die Herstellung einer partiellen oder totalen Dental-Kunststoffprothese. Dabei können konfektionierte Prothesenzähne und insbesondere die Prothesenbasis maschinell im CAM-Verfahren (CAM - Computer-Aided Manufacturing, Deutsch: rechner-unterstützte Fertigung) produziert werden und computergestützt mit CAD-Verfahren (CAD - Computer-Aided Design, Deutsch: rechnerunterstützte Konstruktion) konstruiert werden. Die Kombination solcher Verfahren wird als CAD/CAM-Verfahren bezeichnet, bei der sowohl die Konstruktion als auch die Fertigung rechnergestützt erfolgt. Die Prothesenzähne können als Halbzeug zur teilweisen oder vollständigen Herstellung von Dental-Kunststoffprothesen mit CAM-Verfahren bereitgestellt werden.

Der derzeit gängige Weg ist die analoge Positionierung von Prothesenzähnen zur Herstellung von Dentalprothesen, bei dem zunächst ein Abdruck des zahnlosen Kiefers des Patienten genommen wird. Aus diesem Abdruck wird ein Gipsmodell der Patientensituation gefertigt. Anschließend wird ein Funktionsmodell der Dentalprothese aus Wachs auf dem Gipsmodell aufgebaut und mit Prothesenzähnen bestückt. Diese Wachsprothese geht zum Zahnarzt, um eine Anprobe am Patienten durchzuführen, bei der die Stellungen der künstlichen Prothesenzähne korrigiert werden können. Diese korrigierte Aufstellung geht dann zurück an das Labor, das dann die Wachsbasis entfernt und die Aufstellung der künstlichen Zähne in eine finale Basis aus Kunststoff überführt. Dazu wird eine Hohlform oder Gießform aus diesen beiden Teilen aufgebaut, in der die Prothesenzähne bereits integriert sind. Dadurch sind die Prothesenzähne bereits in die Hohlform eingesetzt und damit positioniert. Die Form wird mit einem zahnfleischfarbenen Kunststoff ausgegossen und während des Gießprozesses werden die Prothesenzähne mit der Prothesenbasis verbunden. Nach Aushärtung des Kunststoffs wird dieser nachbearbeitet, um die gewünschte Form zu erhalten.

Fertige Prothesenbasen können auch aus einem härtenden Kunststoff mit einer Zwischenbasis aus Wachs hergestellt werden. Dabei wird nach der Anprobe und einer eventuellen Umstellung der künstlichen Prothesenzähne ein Vorwall aus Silikon oder Gips erstellt, um die Position und Ausrichtung der künstlichen Zähne zu sichern. Danach entfernt man die Wachsbasis, der entstehende Hohlraum wird in der Regel mit Autopolymerisat aufgefüllt und die künstlichen Prothesenzähne damit auf der festen Prothesenbasis fixiert beziehungsweise einpolymerisiert.

Das gesamte derartige Verfahren ist sehr zeit- und damit kostenintensiv und basiert auf einer großen Zahl handwerklicher Schritte. Im Zuge der Digitalisierung verlagert sich der Aufwand zur Herstellung, Aufstellung und Konstruktion der Prothesenbasen und der Prothesenzähne in das CAD-Modell und die eigentliche Herstellung wird von Maschinen (CAM-Maschinen) übernommen.

Bei der Aufstellung vorkonfektionierter Prothesenzähne werden diese der jeweiligen Mundsituation des Patienten vom Zahntechniker angepasst und beschliffen. Es gibt bereits erste Verfahren, wie beispielsweise die aus der DE 10 2009 056 752 A1 oder der WO 2013 124 452 A1 bekannten Verfahren, bei denen die Teil- beziehungsweise Totaldentalprothese digital aufgestellt und über CAD/CAM-Verfahren produziert wird. Die Problematik der Verbindung inklusive der Korrekturmöglichkeit besteht jedoch in der herkömmlichen wie auch in der digitalen Vorgehensweise.

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Die US 4 175 322 A1 und die US 4 184 253 A1 offenbaren Verfahren, bei denen zwei oder drei Teile eine Vollprothese in einer Wachsbasis relativ zueinander beweglich sind, um die Vollprothese an die Form des Mundraums des Patienten anpassen zu können.

Nachteilig ist bei bekannten Verfahren das Spiel bei der Positionierung der Prothesenzähne in der Prothesenbasis. In der Regel wird dafür eine passgenaue Mulde in einer Prothesenbasis vorgefertigt, um dann die konfektionierten Prothesenzähne einzukleben. Der Klebstoff, mit dem die Prothesenzähne in den Mulden der Prothesenbasis befestigt werden, trägt auf, das heißt, dass er eine gewisse nicht genau vorherbestimmbare Dicke hat. Dadurch stimmen die Höhe, die Position und die Orientierung der Prothesenzähne und aufgrund der veränderten Höhe der Prothesenzähne die Okklusion der Prothesenzähne nicht mehr mit der gewünschten Höhe beziehungsweise mit der gewünschten Okklusion überein. Dies führt dann dazu, dass die Prothesenzähne in der eigentlich fertigen Dentalprothese koronal beschliffen werden müssen, was zusätzliche Arbeit verursacht und den optischen Eindruck der koronalen Enden der Prothesenzähne beinträchtigen kann. Beim einem digital hergestellten Zahnersatz besteht also die Schwierigkeit, das nach dem Verbinden, zum Beispiel dem Verkleben der Zähne in der Prothesenbasis diese in den drei Raumrichtungen x, y, z und auch bezüglich der Orientierung, also einer möglichen Verdrehung oder Verkippung der Prothesenzähne, so positioniert sein sollten, dass die individuelle Okklusion eines Patienten erfüllt ist, da die Menge des Befestigungsmittels je nach ausgeübtem Druck beim Befestigen schwanken kann. Dadurch kann es montagebedingt zu Fehlern kommen.

US 2 328 575 A offenbart ein Verfahren zur Positionierung von Prothesenzähnen in einer Prothesenbasis.

Die Aufgabe der Erfindung besteht also darin, die Nachteile des Stands der Technik zu überwinden. Insbesondere soll ein Verfahren sowie ein Prothesenzahn, ein Satz Prothesenzähne und eine Prothesenbasis bereitgestellt werden, mit dem die Prothesenzähne möglichst präzise bezüglich der Okklusion mit der Prothesenbasis verbunden werden können, ohne dass eine Nachbearbeitung notwendig ist, beziehungsweise es sollen möglichst wenige Nachbearbeitungsschritte notwendig sein. Wenn möglich soll eine Probepassung einer vorgefertigten Dentalprothese möglich sein, die möglichst genau der fertigen Dentalprothese entspricht, das heißt, ohne dass die Okklusion sich bei der Herstellung der fertigen Dentalprothese, also durch das Einkleben der Prothesenzähne, verändert. Ferner sollen moderne Herstellungsverfahren, wie CAD/CAM-Verfahren möglichst gut anwendbar sein, beziehungsweise die Vorteile, die solche CAD/CAM-basierten Verfahren bieten, auch mit den erfindungsgemäßen Verfahren, Prothesenzähnen und Prothesenbasen nutzbar sein.

Die Aufgaben der Erfindung werden gelöst durch ein Verfahren zur Positionierung von Prothesenzähnen in einer Prothesenbasis, bei dem in den Prothesenzähnen basal jeweils zumindest eine Vertiefung vorgesehen ist und/oder in der Prothesenbasis in der zur okklusalen Richtung weisenden Oberfläche mehrere Vertiefungen vorgesehen sind, wobei die Prothesenzähne mit der Prothesenbasis verbunden werden, indem Stifte in die Vertiefungen eingesteckt werden,
wobei die Stifte basal an den Prothesenzähnen angeordnet sind und/oder in okklusaler Richtung an der Prothesenbasis angeordnet sind und/oder die Stifte als separate Haltestifte mit den Prothesenzähnen und der Prothesenbasis verbunden werden,
wobei die Stifte Rastmittel und die Vertiefungen dazu passende Gegenrastmittel aufweisen, so dass die Stifte beim Einstecken mit den Vertiefungen derart arretieren, dass die Prothesenzähne durch eine mechanische Spannung gegen die Prothesenbasis gezogen werden.

Die Stifte und die Vertiefungen können eine zylindrische oder auch eine konische Symmetrie aufweisen. Bei konischer Symmetrie sollte der Durchmesser (bis auf das Rastmittel beziehungsweise das Gegenrastmittel) zur Spitze des Stifts oder zum Boden der Vertiefung hin möglichst nicht zunehmen, um das Einsetzen der Stifte in die Vertiefungen zu ermöglichen beziehungsweise zu erleichtern. Die Vertiefungen können einfache Bohrungen sein oder auch Fräslöcher mit einer nicht rotationssymmetrischen Symmetrie.

Die Rastmittel und die Gegenrastmittel sollen erfindungsgemäß mechanische Rastmittel und mechanische Gegenrastmittel sein.

Bevorzugt kann bei erfindungsgemäßen Verfahren vorgesehen sein, dass beim Einstecken der Stifte in die Vertiefungen die Prothesenzähne ohne Spiel in der Prothesenbasis fixiert werden.

Hierdurch wird erreicht, dass die Positionen und Lagen der Prothesenzähne eindeutig gegen die Prothesenbasis festgelegt werden.

Bei erfindungsgemäßen Verfahren kann vorgesehen sein, dass die Vertiefungen bis auf die Gegenrastmittel zylindrisch sind, bevorzugt bis auf die Gegenrastmittel eine gerade zylindrische Geometrie aufweisen.

Die zylindrische Form ist die einfachste, mit der sich die Vertiefungen und die Stifte realisieren lassen. Unter einer zylindrischen Vertiefung oder einem zylindrischen Stift ist geometrisch eine Vertiefung beziehungsweise ein Stift in Form eines allgemeinen Zylinders mit einer beliebigen Grundfläche zu verstehen, also nicht nur einer mit einer kreisförmigen Grundfläche. Die Innenwand der Vertiefung kann also ein Zylinder mit beliebiger Grundfläche sein und der Mantel des zylindrischen Stifts kann ein Zylinder mit beliebiger Grundfläche sein, das heißt auch mit nicht kreisförmiger oder runder Grundfläche. Erfindungsgemäß wird eine zylindrische Geometrie mit nicht rotationssymmetrischer Grundfläche bevorzugt.

Ferner kann vorgesehen sein, dass die Vertiefungen und die Stifte zueinander passende Formen aufweisen. Das bedeutet insbesondere, dass die Vertiefungen zu mehr als 80% Negativformen der der Stifte bilden, bei denen die Formen weniger als 0,5 mm voneinander abweichen, so dass beim vollständigen Einstecken der Stifte in die Vertiefungen der Zwischenraum zwischen den Stiften und den Vertiefungen im Bereich von mindestens 80% der Oberfläche der Stifte kleiner als 0,5 mm ist.

Durch die passenden Formen können größere Zwischenräume zwischen den Stiften und den Vertiefungen vermieden werden, die beim endgültigen Verbinden der Prothesenzähne mit der Prothesenbasis mit Klebstoff gefüllt werden müssen. Zudem wird die Positionierung der Stifte in den Vertiefungen durch eine Führung der Stifte in den Vertiefungen erleichtert.

Mit einer Weiterbildung kann erfindungsgemäß vorgesehen sein, dass jeder Stift und jede Vertiefung eine eindeutige Form aufweisen, so dass zu jeder Vertiefung jeweils nur ein Stift passt.

Hierdurch wird erreicht, dass die Prothesenzähne nicht an falschen Positionen in der Prothesenbasis eingesetzt werden können.

Des Weiteren kann vorgesehen sein, dass die Vertiefungen und die Stifte nicht rotationssymmetrisch sind, bevorzugt keine Drehsymmetrieachse aufweisen.

Hierdurch wird erreicht, dass die Prothesenzähne nicht mit der falschen Orientierung in die Prothesenbasis eingesetzt werden können.

Es wird auch vorgeschlagen, dass die Gegenrastmittel an einer seitlichen Mantelfläche der Vertiefungen angeordnet sind. Bevorzugt kann dabei auch vorgesehen sein, dass die Rastmittel an einer seitlichen Mantelfläche der Stifte angeordnet sind.

Hiermit kann ein fester Halt bei der Befestigung der Prothesenzähne an der Prothesenbasis erreicht werden. Die Mantelfläche der Vertiefung ist die Oberfläche der Vertiefung, die nicht den Boden der Vertiefung bildet. Dementsprechend ist die Mantelfläche des Stifts die Oberfläche des Stifts, die nicht die Stirnseite beziehungsweise Spitze des Stifts ist. Die Rastmittel und die Gegenrastmittel greifen erfindungsgemäß bevorzugt in einem elastisch deformierten Zustand ineinander, um die Prothesenzähne mit einer mechanischen Spannung in die beziehungsweise an die Prothesenbasis zu ziehen.

Es kann auch vorgesehen sein, dass die Rastmittel durch Vorsprünge gebildet werden, insbesondere durch Wulste, Nuten, Kugelabschnitte oder Haken gebildet werden, und die Gegenrastmittel durch Rast-Vertiefungen oder Rast-Vorsprünge gebildet werden, insbesondere durch Nuten oder durch Negativformen der Rastmittel.

Hiermit kann ein sicherer Sitz erreicht werden. In der einfachsten Form sind die Vorsprünge aus dem gleichen Material geformt, aus dem auch die Stifte, die Prothesenzähne oder die Prothesenbasis bestehen. Die Prothesenzähne, die Prothesenbasis oder die Haltestifte bestehen bevorzugt nur aus jeweils einem Material und sind einteilig ausgeführt.

Die Vorsprünge können bis zu 1 mm vorstehen, bevorzugt zwischen 0,01 mm und 1 mm vorstehen, besonders bevorzugt zwischen 0,05 mm und 0,5 mm vorstehen. Die Rast-Vertiefungen sind dementsprechend bevorzugt zwischen 0,01 mm und 1 mm tief, besonders bevorzugt zwischen 0,05 mm und 0,5 mm tief.

Bevorzugte Ausgestaltungen erfindungsgemäßer Verfahren können auch vorsehen, dass die Vertiefungen und/oder die Stifte in der Prothesenbasis in Aufnahmeflächen für die Prothesenzähne angeordnet sind, bevorzugt in Aufnahmevertiefungen für die Prothesenzähne angeordnet sind, wobei die Aufnahmeflächen Negative der basalen Enden der Prothesenzähne bilden.

Hierdurch kann eine stabile Verbindung der Prothesenzähne mit der Prothesenbasis erreicht werden, insbesondere beim endgültigen Verbinden der Prothesenzähne mit der Prothesenbasis, beispielsweise durch Verkleben. Zudem werden so die Position und die Lage der Prothesenzähne auch durch die Form der Aufnahmeflächen beziehungsweise Aufnahmevertiefungen vorgegeben und dadurch die Durchführung des Verfahrens für den Anwender vereinfacht.

Zum Durchführen einer Passungsprobe beim Patienten kann vorgesehen sein, dass die Prothesenzähne zur Passungsprobe lösbar mit der Prothesenbasis verbunden werden.

Hierdurch können bezüglich der Okklusion der Dentalprothese schlecht sitzende Prothesenzähne nachbearbeitet oder ausgetauscht werden. Der Vorteil ist hierbei, dass durch die mechanische Spannung, mit der die Prothesenzähne in der Prothesenbasis befestigt sind, deren Lage reproduzierbar und eindeutig vorgegeben wird, so dass beim späteren Verkleben der Prothesenzähne mit der Prothesenbasis wieder die gleichen Positionen und auch die gleichen Orientierungen eingenommen werden, ohne dass der Klebstoff auftragen kann und dadurch die Positionen der Prothesenzähne verändert würden.

Des Weiteren kann vorgesehen sein, dass die Prothesenbasis und/oder die Prothesenzähne einteilig mit den Vertiefungen oder mit den Vertiefungen und den Stiften mit einem CAD/CAM-Verfahren hergestellt werden.

Hierdurch wird das Verfahren weiter automatisiert und somit für den Anwender vereinfacht. Zudem können zur Behandlungssituation passende und damit besonders stabil verbindende Vertiefungen und gegebenenfalls Stifte herstellt werden. Durch die Anordnung und die Tiefe der Vertiefungen kann Einfluss auf die Positionsgenauigkeit und die Stabilität der Verbindung der Prothesenzähne zur Prothesenbasis genommen werden.

Gemäß einer bevorzugten Weiterbildung der Erfindung kann vorgesehen sein, dass der Zwischenraum zwischen den Vertiefungen und den zugehörigen Stiften derart gewählt wird oder derart erzeugt wird, dass eine definierte Menge Klebstoff aufgenommen wird, wenn die Stifte mit den Vertiefungen arretiert sind.

Insbesondere bei Anwendung eines CAD/CAM-Verfahrens zur Herstellung der Prothesenzähne beziehungsweise der Prothesenbasis können die Zwischenräume genau berechnet werden, um so ein bestimmtes und definiertes Klebstoffvolumen einfüllen zu können, das zur Verklebung der Prothesenzähne in der Prothesenbasis geeignet ist. Diese definierte Menge des Klebstoffs wird erfindungsgemäß bevorzugt vorgegeben. Hierdurch kann vermieden werden, dass zu viel oder dass überhaupt überschüssiger Klebstoff bei der Verbindung aus den Zwischenräumen hervorquillt und anschließend entfernt werden muss.

Es kann auch vorgesehen sein, dass die Rastmittel an den Stiften und die Gegenrastmittel an den Vertiefungen derart angeordnet sind, dass die Prothesenzähne nur in einer bestimmten Orientierung mit der Prothesenbasis verbunden werden können.

Hierdurch kann erreicht werden, dass wenn die Prothesenzähne beim Einsetzen in die Prothesenbasis einrasten, was durch einen kurzen Stoß an den Prothesenzähnen beziehungsweise der Prothesenbasis zu merken ist, sichergestellt ist, dass die Prothesenzähne in der richtigen Orientierung in der Prothesenbasis festsitzen.

Bevorzugt kann auch vorgesehen sein, dass jeweils ein Stift an den basalen Enden der Prothesenzähnen angeordnet ist und eine Mehrzahl von Vertiefungen in der Prothesenbasis angeordnet sind, wobei bevorzugt Zapfen an den seitlichen Mantelflächen der Stifte als Rastmittel vorgesehen sind und Nuten an den seitlichen Mantelflächen als Gegenrastmittel vorgesehen sind.

Hierdurch ist die Anwendung besonders einfach und der gesamte Aufbau besonders stabil.

Die der Erfindung zugrundeliegenden Aufgaben werden auch gelöst durch ein Verfahren zur Herstellung einer Dentalprothese, bei dem die Prothesenzähne in der Prothesenbasis mit einem erfindungsgemäßen Verfahren positioniert werden, wobei die Prothesenzähne mit der Prothesenbasis verklebt werden, gegebenenfalls nach der Passungsprobe. Eine Zementierung der Prothesenzähne mit der Prothesenbasis ist eine Verklebung im Rahmen der vorliegenden Erfindung.

Hierdurch wird das Verfahren zur Herstellung der Dentalprothese komplettiert. Die Vorteile, die sich aus der Positionierung der Prothesenzähne ergeben, sind nämlich auch für die Herstellung einer Dentalprothese vorteilhaft. Bevorzugt werden die Zwischenräume zwischen Stiften und den Vertiefungen sowie zwischen den Prothesenzähnen und der Prothesenbasis vollständig mit Klebstoff gefüllt. Dadurch werden Löcher und Spalten vermieden, die die Stabilität der Dentalprothese beeinträchtigen könnten und in denen sich ansonsten Speisereste festsetzen könnten.

Die der vorliegenden Erfindung zugrundeliegenden Aufgaben werden ferner gelöst durch einen Prothesenzahn zur Umsetzung eines Verfahrens nach einem der vorangehenden Ansprüche, wobei der Prothesenzahn am basalen Ende zumindest einen Stift mit einem Rastmittel oder zumindest eine Vertiefung mit einem Gegenrastmittel aufweist.

Erfindungsgemäße Prothesenzähne können sich durch eines oder mehrerer der Merkmale auszeichnen, die zu dem erfindungsgemäßen Verfahren bezüglich der Prothesenzähne oben oder im Folgenden beschrieben sind.

Ebenso werden die der vorliegenden Erfindung zugrundeliegenden Aufgaben gelöst durch einen Prothesenzahn-Satz mit mehreren unterschiedlichen erfindungsgemäßen Prothesenzähnen.

Schließlich werden die der vorliegenden Erfindung zugrundeliegenden Aufgaben auch gelöst durch eine Prothesenbasis zur Umsetzung eines erfindungsgemäßen Verfahrens, wobei die Prothesenbasis in der zur okklusalen Richtung weisenden Oberfläche zumindest einen Stift mit einem Rastmittel und/oder zumindest eine Vertiefung mit einem Gegenrastmittel aufweist, wobei bevorzugt der zumindest eine Stift und/oder die zumindest eine Vertiefung in einer Aufnahmefläche oder in mehreren Aufnahmeflächen für Prothesenzähne angeordnet sind.

Erfindungsgemäß bevorzugt weist die Prothesenbasis mehrere Stifte und/oder mehrere Vertiefungen auf.

Erfindungsgemäße Prothesenbasen können sich durch eines oder mehrerer der Merkmale auszeichnen, die zu dem erfindungsgemäßen Verfahren bezüglich der Prothesenbasen oben oder im Folgenden beschrieben sind.

Der Erfindung liegt die überraschende Erkenntnis zugrunde, dass es durch die Klemmpassung aufgrund des Eingriffs des Rastmittels in das Gegenrastmittel beim Verbinden der Prothesenzähne mit der Prothesenbasis gelingt, die Position und Orientierung der Prothesenzähne, insbesondere die für die Okklusion wichtige Höhe (z-Richtung) der Prothesenzähne, zuverlässig und reproduzierbar einzustellen. Durch die mechanische Spannung zwischen der Prothesenbasis und den Prothesenzähnen wird erreicht, dass diese in die gewünschte Position überführt werden, auch wenn ein Klebstoff, wie beispielsweise ein PMMA-Zement, zwischen der Prothesenbasis und den Prothesenzähnen vorhanden ist. Hierdurch wird sichergestellt, dass es zu keiner Positionsveränderung der Prothesenzähne relativ zu der Prothesenbasis aufgrund des Klebstoffs beziehungsweise Verbindungsmittels kommt.

Bei bisherigen Lösungen ist die Fläche zwischen Prothesenzahn und Prothesenbasis individuell und es gibt keine Garantie, dass die Prothesenzähne insbesondere in z-Achse (also in der für die Okklusion wichtigen Höhe) in der richtigen Lage sind, was zu Über- oder Unterbiss führen kann.

Um ein in x-y-z-Richtung exaktes Positionieren zu ermöglichen werden erfindungsgemäß Nuten, Hinterschnitte, Retentionen oder ähnliches verwendet. Hierzu können in den Vertiefungen und/oder den Stiften durchgehende Rillen, nicht durchgehende Rillen, einzelne Punkte, Zähne, Keile, also allgemein Rast-Vorsprünge und Rast-Vertiefungen vorgesehen sein, die gegenseitig unter mechanischer Spannung rasten. Die Vertiefungen können in der Prothesenbasis und/oder in den Prothesenzähnen vorgesehen sein. Bevorzugt ist die Bohrung im Prothesenzahn vorgesehen.

Im Folgenden werden Ausführungsbeispiele der Erfindung anhand von fünf schematisch dargestellten Figuren erläutert, ohne jedoch dabei die Erfindung zu beschränken. Dabei zeigt:
- Figur 1:: eine schematische Querschnittansicht eines Prothesenzahns und einer Prothesenbasis zur Umsetzung eines erfindungsgemäßen Verfahrens;
- Figur 2:: eine schematische Querschnittansicht eines Prothesenzahns und einer Prothesenbasis zur Umsetzung eines erfindungsgemäßen Verfahrens mit einer alternativen Verbindungsmöglichkeit;
- Figur 3:: eine schematische Querschnittansicht zweier Prothesenzähne und einer Prothesenbasis zur Umsetzung eines erfindungsgemäßen Verfahrens mit zwei weiteren erfindungsgemäßen Verbindungsmöglichkeiten;
- Figur 4:: schematische perspektivische Ansichten von fünf verschiedenen Enden von Stiften (A bis E) zur Umsetzung eines erfindungsgemäßen Verfahrens;
- Figur 5:: eine schematische Querschnittansicht eines Ausschnitts einer mechanisch gespannten Verbindung zwischen einem Prothesenzahn und einer Prothesenbasis, um die Umsetzung eines erfindungsgemäßen Verfahrens zu verdeutlichen; und
- Figur 6:: eine schematische Querschnittansicht eines Ausschnitts des mechanisch entspannten Rastmittels.

In den Figuren werden bei unterschiedlichen Ausführungen für gleichartige Teile, insbesondere für gleichartige aber im Detail unterschiedliche Rastmittel, teilweise die gleichen Bezugszeichen verwendet. Geschnittene Flächen sind in den Figuren schraffiert dargestellt.

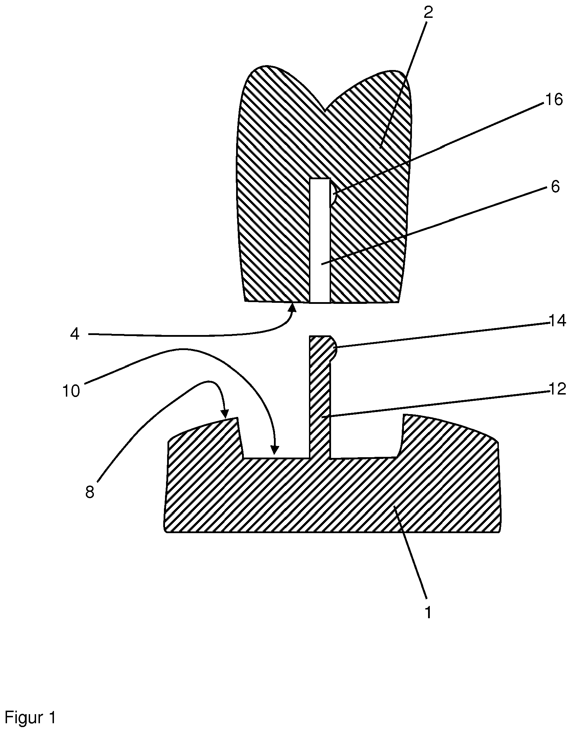

Figur 1 zeigt eine schematische Querschnittansicht einer Prothesenbasis 1 und eines Prothesenzahns 2 zur Umsetzung eines erfindungsgemäßen Verfahrens. In dem basalen Ende 4 des Prothesenzahns 2 ist eine Vertiefung 6 in Form eines zylindrischen Lochs vorgesehen. Dem Prothesenzahn 2 gegenüber ist in der Prothesenbasis 1 eine Aufnahmefläche 10 beziehungsweise eine Aufnahmevertiefung 10 zur Aufnahme des Prothesenzahns 2 vorgesehen. Die Aufnahmefläche 10 ist in der Oberfläche 8 der Prothesenbasis 1 angeordnet, die in okklusaler Richtung ausgerichtet ist. Die Aufnahmefläche 10 beziehungsweise die Aufnahmevertiefung 10 bildet ein Negativ des basalen Endes des Prothesenzahns 2. Auf der Aufnahmefläche 10 ist ein zylindrischer Stift 12 vorgesehen, der genau in die Vertiefung 6 des Prothesenzahns 2 passt. Der zylindrische Stift 12 steht bevorzugt senkrecht von der Aufnahmefläche 10 ab, besonders bevorzugt 90° mit einer maximalen Abweichung von 10°. Es sei darauf hingewiesen, dass vorliegend unter einer zylindrischen Geometrie also auch unter einer zylindrischen Vertiefung 6 oder einem zylindrischen Stift 12 die geometrische Form eines allgemeinen Zylinders mit einer beliebigen Grundfläche zu verstehen ist, also nicht nur ein Zylinder mit einer kreisförmigen Grundfläche.

An dem Stift 12 ist ein Rastmittel 14 vorgesehen, das in ein Gegenrastmittel 16 in der Vertiefung 6 greift, wenn der Stift 12 vollständig in die Vertiefung 6 eingesteckt ist. Der Stift 12, das Rastmittel 14 und die Prothesenbasis 1 sind einteilig aus einem rosafarbenen Kunststoff, wie beispielsweise PMMA (Polymethylmethacrylat), gefertigt und bevorzugt mit einem CAD/CAM-Verfahren hergestellt worden. Das Rastmittel 14 ist als Kugelabschnitt auf der Oberfläche des Stifts 12 angeordnet und steht über den Zylindermantel des Stifts um 0,01 mm bis maximal 1 mm über, bevorzugt um 0,05 mm bis 0,4 mm über. Das Gegenrastmittel 16 ist dementsprechend eine Hohlform, die das Rastmittel 14 aufnehmen kann, bevorzugt eine Rast-Vertiefung 16 in Form des Negativs des Kugelabschnitts des Rastmittels 14. Dann ist nämlich auch ein Verdrehen des Prothesenzahns 2 in der Prothesenbasis 1 um die Zylinderachse des Stifts 12 beziehungsweise der Vertiefung 6 nicht mehr ohne weiteres möglich und der Zwischenraum zwischen dem zusammengesetzten Prothesenzahn 2 und der Prothesenbasis 1 bleibt klein. Zur eindeutigen Festlegung der Orientierung des Prothesenzahns 2 in der Prothesenbasis kann zudem auch eine eindeutige Form der Aufnahmefläche 10 eingesetzt werden, auf die der Prothesenzahn 2 nur in einer bestimmten Orientierung flächenbündig aufzusetzen ist.

Das Rastmittel 14 an dem Stift 12 und der Stift 12 selbst sowie in geringem Maß auch der Prothesenzahn 2 und damit die Vertiefung 6 sind elastisch verformbar, so dass sich der Stift 12 mit dem Rastmittel 14 in die Vertiefung 6 stecken lässt, indem das Rastmittel 14 elastisch komprimiert wird. Sobald das Rastmittel 14 in das Gegenrastmittel 16 rastet, entspannt sich das komprimierte Rastmittel 14 (nicht zwingend vollständig beziehungsweise bevorzugt nicht vollständig) und in geringem Ausmaß entspannt sich auch die gedehnte Vertiefung 6. Das Rastmittel 14 ist dabei in einer geringfügig geringeren Höhe an dem Stift 12 angeordnet, als das Gegenrastmittel 16 in der Vertiefung 6. Dadurch kann das Rastmittel 14 nicht vollständig entspannen und die verbliebene Spannung zieht den Prothesenzahn 2 in Richtung der Prothesenbasis 1. Hierzu reicht bereits eine Höhendifferenz zwischen dem Rastmittel 14 und dem Gegenrastmittel 16 von 0,1 mm aus, es können aber je nach Geometrie des Rastmittels 14 und des Gegenrastmittels 16 auch größere Höhendifferenzen gewählt werden.

Damit sich die mechanische Spannung aufbauen kann, sind das Rastmittel 14 und das Gegenrastmittel 16 mit zueinander geneigten Flächen ausgeführt, die vorliegend durch die Rundungen der Kugelabschnitte realisiert sind. Aufgrund der abgerundeten Form des Rastmittels 14 und des Gegenrastmittels 16 ist kein weiteres eine mechanische Spannung beziehungsweise einen mechanischen Zug bewirkendes Element erforderlich.

Zur endgültigen Befestigung des Prothesenzahns 2 in der Prothesenbasis 1 wird zuvor ein Klebstoff (nicht gezeigt) in die Vertiefung 6 eingetragen und/oder auf den Stift 12 aufgetragen. Der korrekte Sitz des Prothesenzahns 2 beim Aushärten des Klebstoffs (beispielsweise ein PMMA-Zement (Polymethylmethacrylat-Zement oder ein anderer Zwei-Komponenten-Kleber) wird durch die mechanische Spannung gewährleistet, den das Rastmittel 14 und das Gegenrastmittel 16 aufeinander ausüben. Sobald der Klebstoff ausgehärtet ist, ist der Prothesenzahn 2 befestigt und die Dentalprothese zusammengebaut. Überschüssiger Klebstoff kann vor und/oder nach dem Aushärten des Klebstoffs entfernt werden. Dabei ist von Vorteil, dass das freie Volumen zwischen dem Prothesenzahn 2 und der Prothesenbasis 1 durch den Sitz genau definiert ist und somit das benötigte Klebstoffvolumen genau bekannt ist. Dennoch wird der Klebstoff bevorzugt im geringen Maß im Überschuss verwendet, um sicherzustellen, dass keine Hohlräume oder Spalte zwischen dem Prothesenzahn 2 und der Prothesenbasis 1 verbleiben, die nicht mit Klebstoff gefüllt sind. Ebenso kann die Dentalprothese nach dem Aushärten des Klebstoffs poliert werden, um einen besseren optischen Eindruck zu erhalten.

Vor der endgültigen Verbindung kann der Prothesenzahn 2 durch geeigneten Kraftaufwand wieder von der Prothesenbasis 1 getrennt werden. Dies kann beispielsweise hilfreich sein, um den Sitz der so provisorisch zusammengesetzten Dentalprothese am Patienten zu prüfen (eine sogenannte Passungsprobe). Wenn notwendig kann der Prothesenzahn 2 zur besseren Passung basal geringfügig abgeschliffen werden, sofern hierdurch nicht vollständig die mechanische Spannung zwischen der Prothesenbasis 1 und dem eingesteckten Prothesenzahn 2 aufgehoben wird.

Vor und hinter dem im Schnitt gezeigten Prothesenzahn 2 sind weitere Prothesenzähne (nicht gezeigt) vorgesehen die in gleicher Art oder mit einer alternativen erfindungsgemäßen Methode mit der Prothesenbasis 1 verbunden werden, so dass mit dem Prothesenzahn 2, den anderen Prothesenzähnen und der Prothesenbasis 1 eine Teildentalprothese oder eine Volldentalprothese hergestellt werden kann.

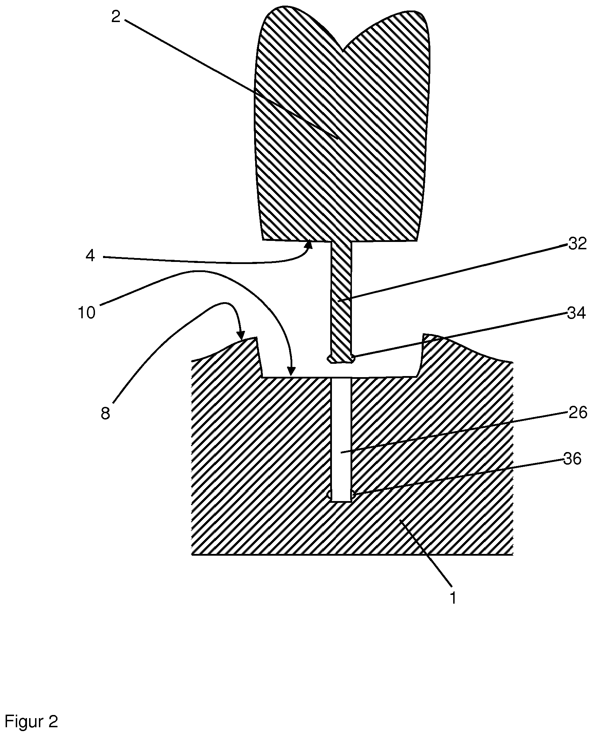

Figur 2 zeigt eine schematische Querschnittansicht eines Prothesenzahns 2 und einer Prothesenbasis 1 zur Umsetzung eines erfindungsgemäßen Verfahrens mit einer im Vergleich zu Figur 1 alternativen Verbindungsmöglichkeit. In der Prothesenbasis 1 eine Aufnahmefläche 10 beziehungsweise eine Aufnahmevertiefung 10 zur Aufnahme des Prothesenzahns 2 vorgesehen. Die Aufnahmefläche 10 ist in der Oberfläche 8 der Prothesenbasis angeordnet, die in okklusaler Richtung ausgerichtet ist. Die Aufnahmefläche 10 beziehungsweise die Aufnahmevertiefung 10 bildet ein Negativ des basalen Endes des Prothesenzahns 2. In der Aufnahmefläche 10 der Prothesenbasis 1 ist eine Vertiefung 26 in Form eines zylindrischen Lochs vorgesehen. Demgegenüber ist auf der basalen Seite 4 des Prothesenzahns 2 ein zylindrischer Stift 32 vorgesehen, der genau in die Vertiefung 26 der Prothesenbasis 1 passt. Der zylindrische Stift 32 steht bevorzugt grob senkrecht von der Basis 4 des Prothesenzahns 2 ab, besonders bevorzugt mit 90° absteht mit einer maximalen Abweichung von 20°. Es sei darauf hingewiesen, dass vorliegend unter einer zylindrischen Geometrie also auch unter einer Vertiefung 26 oder einem zylindrischen Stift 32 die geometrische Form eines allgemeinen Zylinders mit einer beliebigen Grundfläche zu verstehen ist, also nicht nur ein Zylinder mit einer kreisförmigen Grundfläche.

An dem Stift 32 ist ein Rastmittel 34 vorgesehen, das in ein Gegenrastmittel 36 in der Vertiefung 26 greift, wenn der Stift 32 vollständig in die Vertiefung 26 eingesteckt ist. Der Stift 32, das Rastmittel 34 und der Prothesenzahn 2 sind einteilig aus einem zahnfarbenen Kunststoff, wie beispielsweise PMMA, gefertigt. Die Prothesenbasis 1 ist einteilig aus einem rosafarbenen Kunststoff, wie beispielsweise PMMA, gefertigt und bevorzugt mit einem CAD/CAM-Verfahren hergestellt worden. Das Rastmittel 34 ist als umlaufender Wulst auf der Oberfläche des Stifts 32 im Bereich der Spitze des Stifts 32 (in Figur 2 unten) angeordnet und steht über den Zylindermantel des Stifts um 0,01 mm bis maximal 1 mm über, bevorzugt um 0,05 mm bis 0,4 mm über. Das Gegenrastmittel 36 ist dementsprechend ein Hohlring, der das Rastmittel 34 aufnehmen kann, bevorzugt eine Rast-Vertiefung 36 in Form des Negativs des Wulstes des Rastmittels 14. So bleibt der Zwischenraum zwischen dem zusammengesetzten Prothesenzahn 2 und der Prothesenbasis 1 klein. Um eine eindeutige Positionierung und Orientierung des Prothesenzahns 2 in der Prothesenbasis 1 zu erreichen, ist eine eindeutige Aufnahmefläche 10 vorgesehen, auf die der Prothesenzahn 2 nur in einer bestimmten Orientierung flächenbündig aufzusetzen ist.

Das Rastmittel 34 an dem Stift 32 und der Stift 32 selbst sowie in geringem Maß auch der Prothesenzahn 2 und damit die Vertiefung 26 sind elastisch verformbar, so dass sich der Stift 32 mit dem Rastmittel 34 in die Vertiefung 26 stecken lässt, indem das Rastmittel 34 elastisch komprimiert wird. Sobald das Rastmittel 34 in das Gegenrastmittel 36 rastet, entspannt sich das komprimierte Rastmittel 34 (nicht zwingend vollständig beziehungsweise bevorzugt nicht vollständig) und in geringem Ausmaß auch die gedehnte Vertiefung 26. Das Rastmittel 34 ist dabei in einer geringfügig geringeren Höhe an dem Stift 32 angeordnet, als das Gegenrastmittel 36 in der Vertiefung 26. Dadurch kann das Rastmittel 34 nicht vollständig entspannen und die verbliebene mechanische Spannung zieht den Prothesenzahn 2 in Richtung der Prothesenbasis 1. Hierzu reicht bereits eine Höhendifferenz zwischen dem Rastmittel 34 und dem Gegenrastmittel 36 von 0,1 mm aus, es können aber je nach Geometrie des Rastmittels 34 und des Gegenrastmittels 36 auch größere Höhendifferenzen gewählt werden.

Damit sich die mechanische Spannung aufbauen kann, sind das Rastmittel 34 und das Gegenrastmittel 36 mit zueinander geneigten Flächen durch die Rundung ausgeführt. Aufgrund der abgerundeten Form des Rastmittels 34 und des Gegenrastmittels 36 ist dies kein weiteres, eine mechanische Spannung erzeugendes Element erforderlich.

Zur endgültigen Befestigung des Prothesenzahns 2 in der Prothesenbasis 1 wird zuvor ein Klebstoff (nicht gezeigt) in die Vertiefung 26 eingetragen und/oder auf den Stift 32 aufgetragen. Der korrekte Sitz des Prothesenzahns 2 beim Aushärten des Klebstoffs (beispielsweise ein PMMA-Zement oder ein anderer Zwei-Komponenten-Kleber) wird durch die mechanische Spannung gewährleistet, den das Rastmittel 34 und das Gegenrastmittel 36 aufeinander ausüben. Sobald der Klebstoff ausgehärtet ist, ist der Prothesenzahn 2 befestigt und die Dentalprothese zusammengebaut. Überschüssiger Klebstoff kann vor und/oder nach dem Aushärten des Klebstoffs entfernt werden. Dabei ist von Vorteil, dass das freie Volumen zwischen dem Prothesenzahn 2 und der Prothesenbasis 1 durch den Sitz genau definiert ist und somit das benötigte Klebstoffvolumen genau bekannt ist. Dennoch wird der Klebstoff bevorzugt im geringen Maß im Überschuss verwendet, um sicherzustellen, dass keine Hohlräume oder Spalte zwischen dem Prothesenzahn 2 und der Prothesenbasis 1 verbleiben, die nicht mit Klebstoff gefüllt sind. Ebenso kann die Dentalprothese nach dem Aushärten des Klebstoffs poliert werden, um einen besseren optischen Eindruck zu erhalten.

Vor der endgültigen Verbindung kann der Prothesenzahn 2 durch geeigneten Kraftaufwand wieder von der Prothesenbasis 1 getrennt werden. Dies kann beispielsweise hilfreich sein, um den Sitz der so provisorisch zusammengesetzten Dentalprothese am Patienten zu prüfen. Wenn notwendig kann der Prothesenzahn 2 zur besseren Passung basal geringfügig abgeschliffen werden, sofern hierdurch nicht vollständig die mechanische Spannung zwischen der Prothesenbasis 1 und dem eingesteckten Prothesenzahn 2 aufgehoben wird.

Vor und hinter dem im Schnitt gezeigten Prothesenzahn 2 sind weitere Prothesenzähne (nicht gezeigt) vorgesehen die in gleicher Art oder mit einer alternativen erfindungsgemäßen Methode mit der Prothesenbasis 1 verbunden werden, so dass mit dem Prothesenzahn 2, den anderen Prothesenzähnen und der Prothesenbasis 1 eine Teildentalprothese oder eine Volldentalprothese hergestellt werden kann.

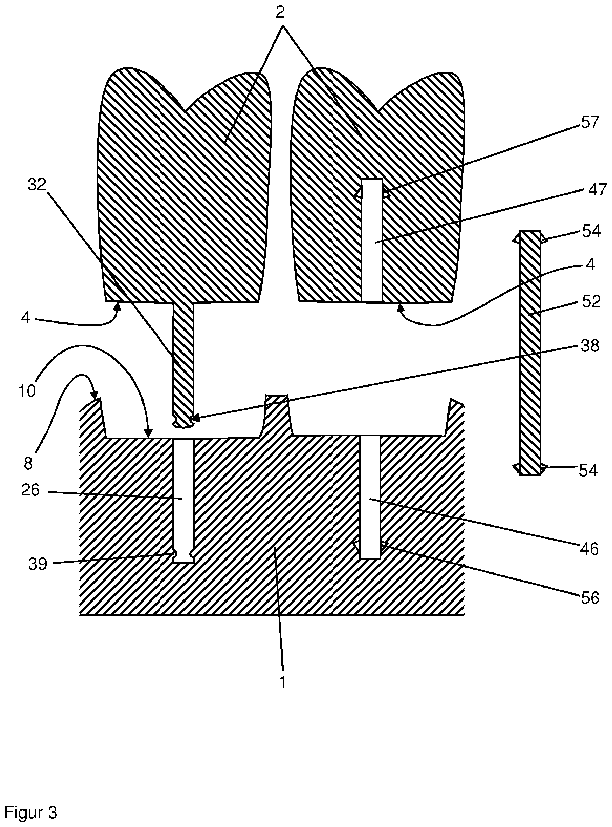

Figur 3 zeigt eine schematische Querschnittansicht zweier Prothesenzähne 2 und einer Prothesenbasis 1 zur Umsetzung eines erfindungsgemäßen Verfahrens mit zwei weiteren erfindungsgemäßen Verbindungsmöglichkeiten. Der Querschnitt ist in Figur 3 derart dargestellt, dass zwei Prothesenzähne 2 zu sehen sind und ein nur Ausschnitt der Prothesenbasis 1 dargestellt ist, der sich nach rechts und links fortsetzt. Die Aufnahmeflächen 10 für die Prothesenzähne 2 sowie die zugehörigen Prothesenzähne 2 haben unterschiedliche Befestigungsmöglichkeiten. Damit ist eindeutig immer nur ein bestimmter Prothesenzahn 2 in einer bestimmten Aufnahmefläche 10 zu befestigen.

Die Verbindung des linken Prothesenzahns 2 (in Figur 3 links) entspricht in etwa dem Ausführungsbeispiel nach Figur 2, wobei das Rastmittel 38 am Stift 32 als ringförmige Nut 38 vorgesehen ist und das Gegenrastmittel 39 in der Vertiefung 26 durch einen vorstehenden Ring 39 gebildet wird.

Der rechte Prothesenzahn 2 (in Figur 3 rechts) wird mit einem separaten Haltestift 52 an der rechten Aufnahmefläche 10 der Prothesenbasis 1 befestigt. Der Haltestift 52 weist an beiden Enden mehrere vorstehende Haken 54 als Rastmittel 54 auf. In dem rechten Prothesenzahn 2 ist eine Vertiefung 47 vorgesehen, die mehrere Ausnehmungen 57 als Gegenrastmittel 57 aufweist. Ebenso ist in der Prothesenbasis 1 in der rechten Aufnahmefläche 10 eine Vertiefung 46 vorgesehen, die mehrere Ausnehmungen 56 als Gegenrastmittel 56 aufweist. Die Vertiefungen 46, 47 passen zu dem Haltestift 52, so dass der Haltestift 52 in die Vertiefungen 46, 47 eingesteckt werden kann, wobei die Rastmittel 54 in die Gegenrastmittel 56, 57 greifen und der rechte Prothesenzahn 2 in die rechte Aufnahmefläche 10 der Prothesenbasis 1 gezogen wird.

Die mechanische Spannung kann durch die Elastizität des Haltestifts 52 und/oder durch zusätzliche elastische Elemente (nicht gezeigt) bewirkt werden.

Zur richtigen Orientierung der Prothesenzähne 2 und zur Verbindung der Prothesenzähne 2 mit der Prothesenbasis 1 mit Hilfe von Klebstoff sei auf die Ausführung zu den Figuren 1 und 2 verwiesen, die ohne weiteres auf die mit Figur 3 gezeigten Ausführungen übertragbar sind.

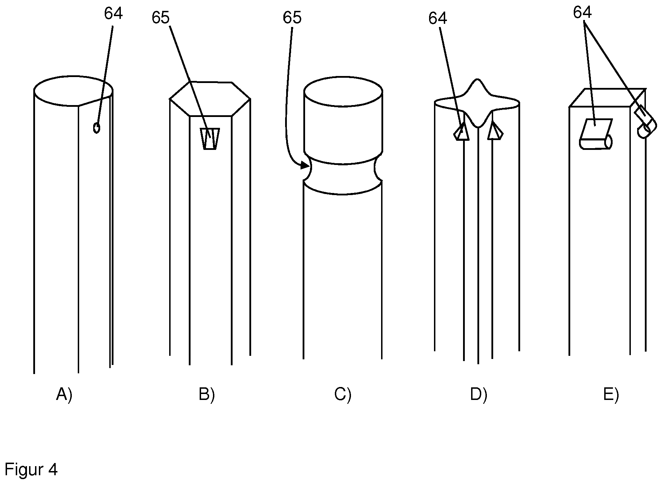

Figur 4 zeigt schematische perspektivische Ansichten von fünf verschiedenen Enden von Stiften (A bis E) zur Umsetzung erfindungsgemäßer Verfahren. Die erste Stift, gezeigt in Figur 4 A), hat die Form eines geraden Zylinders mit einer kreisförmigen Grundfläche mit einer abgeschnittenen Kante, also die Form eines Kreissegments.

An der ebenen Zylindermantelfläche ist als Rastmittel 64 ein kleiner elastisch deformierbarer Vorsprung in Form eines flachen Kugelabschnitts vorgesehen.

Der zweite Stift, gezeigt in Figur 4 B), ist ein gerader Zylinder mit einer sechseckigen Grundfläche. Die Form entspricht in etwa der eines Sechskants. In einer der in Figur 4 B) zu sehenden Mantelflächen ist eine Vertiefung 65 als Rastmittel 65 vorgesehen. Dieses Rastmittel 65 kann ein elastisch deformierbares Gegenrastmittel (nicht gezeigt) aufnehmen, das in einer passenden sechskantigen Vertiefung (nicht gezeigt) angeordnet ist.

Der dritte Stift, gezeigt in Figur 4 C), hat die Form eines geraden Zylinders mit einer kreisförmigen Grundfläche. An der Zylindermantelfläche ist als Rastmittel 65 eine umlaufende Nut 65 als Negativform eines Torus vorgesehen. Diese Nut 65 kann ein elastisch deformierbares Gegenrastmittel (nicht gezeigt) in Form eines umlaufenden Rings oder Vorsprungs aufnehmen, der in einer passenden zylindrischen Vertiefung mit kreisförmiger Grundfläche (nicht gezeigt) angeordnet ist.

Der vierte Stift, gezeigt in Figur 4 D), hat die Form eines geraden Zylinders mit einer sternförmigen Grundfläche. In allen Ecken der Zylindermantelfläche sind als Rastmittel 64 vorstehende Nasen 64 vorgesehen.

Der fünfte Stift, gezeigt in Figur 4 E), hat die Form eines geraden Zylinders mit einer rechteckigen Grundfläche. An der Zylindermantelfläche ist als Rastmittel 64 eine vorstehende Spange 64 aus Federstahl vorgesehen. Die Spange 64 ist eine in sich gekrümmte elastische Blattfeder 64, die mit dem Stift verbunden ist. Die Blattfeder 64 wird beim Einstecken des Stifts komprimiert und eingerollt und dehnt sich beim einrasten wieder aus. Nachteilig ist bei dieser Ausführung der größere Spalt zwischen dem Stift und der hierfür notwendigen Vertiefung, so dass die anderen mit Figur 4 gezeigten Ausführungsformen bevorzugt sind.

Im Folgenden wird kurz beschrieben, wie mit solchen Stiften nach Figur 4 und mit Prothesenzähnen 2 und Prothesenbasen 1 ähnlich denen, die in den Figuren 1 bis 3 gezeigt sind, ein erfindungsgemäßes Verfahren durchgeführt werden kann.

In der Mitte einer Aufnahmevertiefung einer Prothesenbasis kann ein Stift nach Figur 4 oder ein andere Stift in Form eines allgemeinen Zylinders eingebaut werden, der einen Verdreh-Schutz (zum Beispiel eine gerade Fläche, Nut, etc.) und auf der Außenfläche ein Rastmittel 64, 65 (Nase, Nut, Rillen, etc.) hat. Gleichzeitig gibt es auf dem gegenseitigen Prothesenzahn eine Vertiefung, die hierzu passt, mit entsprechenden gegenseitigen Einraste-Möglichkeiten, also einem Gegenrastmittel, und dem gegenseitigen Verdreh-Schutz. Hiermit lassen sich die Teile zueinander im vorher durch die Konstruktion vorgegeben Raum optimal platzieren. Vorzugsweise ist der Stift kürzer als die Vertiefung tief.

Die optimale Konstruktion und Positionierung im CAD-Verfahren kann vor einer Korrektur, optimal nach einer Korrektur, nach Anprobe erfolgen. Der Zylinder (der Stift) kann auch auf der basalen Fläche des Prothesenzahns vorgesehen sein und die Vertiefung auf der Prothesenbasis.

Kleine Löcher auf der Befestigungsfläche der Prothesenzähne und der Prothesenbasis können es ermöglichen, überschüssige Befestigungsmasse (Klebstoff) austreten zu lassen, so dass die Prothesenzähne tatsächlich in der gewünschten Höhe relativ zur Prothesenbasis arretiert werden.

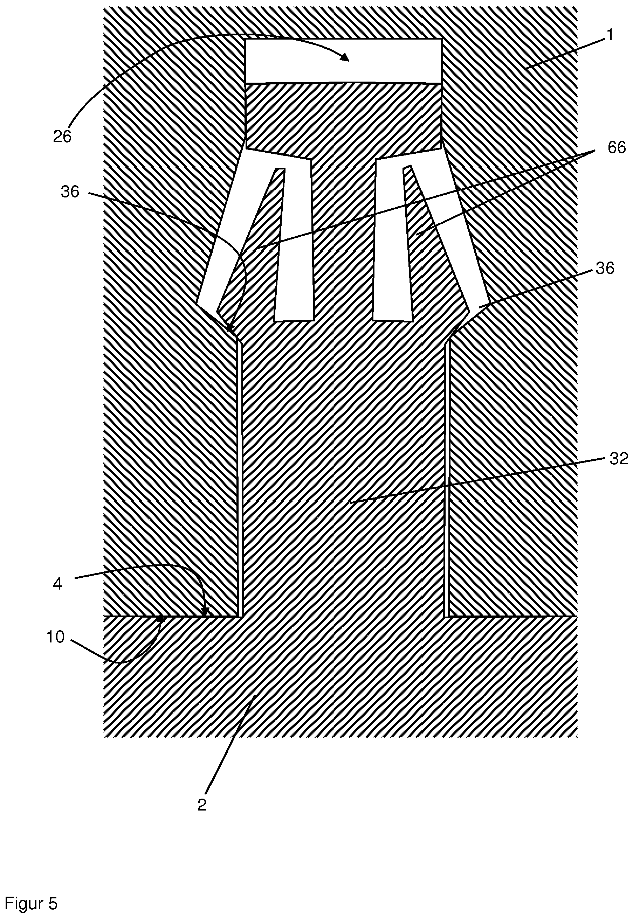

Figur 5 zeigt eine schematische Querschnittansicht eines Ausschnitts einer mechanisch gespannten Verbindung zwischen einem Prothesenzahn 2 und einer Prothesenbasis 1, um die Umsetzung eines erfindungsgemäßen Verfahrens zu verdeutlichen. Auf der basalen Seite 4 des Prothesenzahns 2 ist ein Stift 32 mit einem Rastmittel 66 vorgesehen. Das Rastmittel 66 ist durch zwei (oder mehr) gegen den Stift 32 kippbare Vorsprünge gebildet, die in einen Hohlraum am Stift 32 anlegbar sind, wenn der Stift 32 in eine Vertiefung 26 in der Prothesenbasis 1 eingeführt wird. Beim Einstecken des Stifts 32 erreichen die Rastmittel 66 ein Gegenrastmittel 36 in der Vertiefung 26 und können dort teilweise entspannen. Eine vollständige Entspannung der Rastmittel 66 wird verhindert, da die basale Oberfläche 4 des Prothesenzahns 2 bereits an der Aufnahmefläche 10 der Prothesenbasis 1 anliegt.

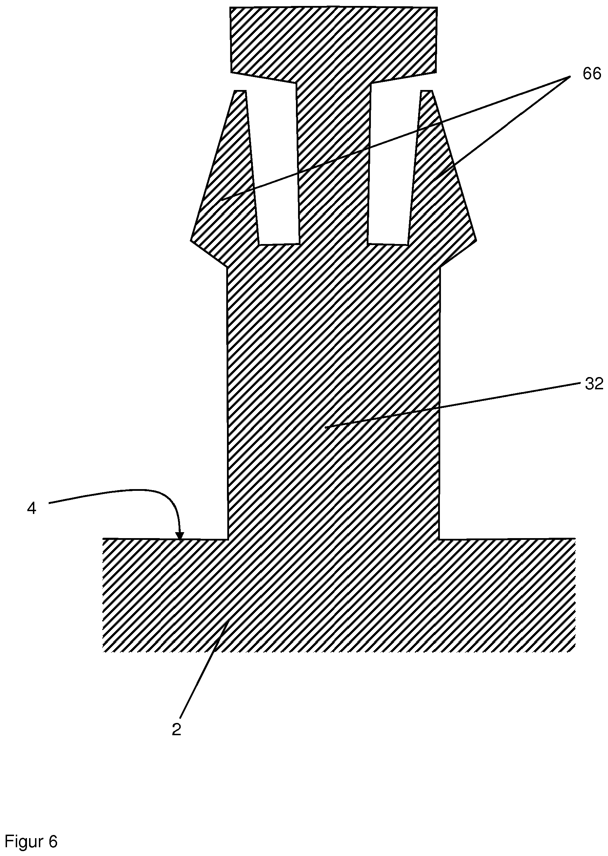

Figur 6 zeigt im Vergleich dazu die mechanisch entspannten Rastmittel 66 in einer schematischen Querschnittansicht, bevor der Stift 32 in die Vertiefung 26 eingesteckt wird. Wie zu erkennen ist, sind die Rastmittel 66 im entspannten Zustand radial weiter nach außen gekippt, als im gespannten Zustand nach Figur 5.

Bei der in Figur 5 dargestellten mechanisch gespannten Verbindung, führt die elastische Verformung des Rastmittels 66 dazu, dass die Rastmittel 66 gerne wieder in die in Figur 6 gezeigte Stellung relativ zu dem Stift 32 übergehen würden. Dadurch üben sie eine Kraft auf die vorderen Kanten des Gegenrastmittels 36 aus, die dazu führt, dass der Prothesenzahn 2 auf die Aufnahmeflächen 10 der Prothesenbasis 1 gezogen wird. Hierdurch wird sichergestellt, dass der Prothesenzahn 2 die richtige Höhe und damit die gewünschte Okklusion erhält.

Das Ausführungsbeispiel nach den Figuren 5 und 6 soll lediglich das Funktionsprinzip und die Wirkung der mechanischen Spannung darstellen. Da die Abmessungen der Prothesenzähne für einen derartigen Aufbau relativ klein sind, wird erfindungsgemäß ein elastisch komprimierbares Rastmittel (wie in den Figuren 1 und 2) oder ein elastisch komprimierbares Gegenrastmittel (wie in Figur 3 links) bevorzugt. Bezüglich den Ausführungsbeispielen nach den Figuren 1 und 2 bedeutet dies, wenn die Stifte 12, 32 in die Vertiefungen 6, 26 vollständig eingesteckt sind, sind die Rastmittel 14, 34 noch immer etwas elastisch komprimiert und würden sich gerne weiter ausdehnen. Dazu müssten die Rastmittel 14, 34 die Stifte 12, 32 tiefer in die Vertiefungen 6, 26 ziehen, da die Gegenrastmittel 16, 36 etwas tiefer in den Vertiefungen 6, 26 angeordnet sind, als die Höhe der Rastmittel 14, 34 auf den Stiften 12, 32 ist. Die Rastmittel 14, 34 dehnen sich also in Richtung der Gegenrastmittel 16, 36 aus und ziehen so an dem Stift 12, 32, der die so entstandene mechanische Spannung beziehungsweise Zug-Spannung zwischen Prothesenzahn 2 und der Prothesenbasis 1 weiterleitet. Die angestrebte Ausdehnung der elastisch komprimierten Rastmittel 14, 34 bewirkt also, dass der Prothesenzahn 2 in Richtung der Prothesenbasis 1 auf die Aufnahmefläche 10 gezogen wird. Dadurch wird der Prothesenzahn 2 genau und exakt auf der Prothesenbasis 1 positioniert. Diese Positionierung erfolgt auch beim Einkleben beziehungsweise endgültigen Befestigen der Prothesenzähne 2 zur Herstellung der Dentalprothese.

Neben den mit den Figuren 1 bis 6 gezeigten Verrastungen könnte auch ein Bajonettverschluss verwendet werden, der auf Zug eingesetzt wird.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein. Es versteht sich, dass die Vorrichtung für die gezeigten Anzahlen von Prothesenzähnen 2 neben den gezeigten Ausführungsbeispielen ohne weiteres auf andere Mengen von Prothesenzähnen 2 übertragbar sind, wobei der volle Satz von vierzehn Prothesenzähnen 2 pro Prothesenbasis 1 für eine Dental-Vollprothese erfindungsgemäß bevorzugt ist.

### Bezugszeichenliste

- 1: Prothesenbasis
- 2: Prothesenzahn
- 4: Basale Seite des Prothesenzahns
- 6: Vertiefung
- 8: Zur Okklusionsebene ausgerichtete Oberfläche der Prothesenbasis
- 10: Aufnahmefläche / Aufnahmevertiefung
- 12: Stift
- 14: Rastmittel / vorstehender Kugelabschnitt
- 16: Gegenrastmittel / Rastvertiefung als Kugelabschnitt
- 26: Vertiefung
- 32: Stift
- 34: Rastmittel / vorstehender umlaufender Wulst
- 36: Gegenrastmittel / Rastvertiefung als Ringförmige Nut
- 38: Rastmittel / Rastvertiefung als Ringförmige Nut
- 39: Gegenrastmittel / vorstehender umlaufender Wulst
- 46: Vertiefung
- 47: Vertiefung
- 52: Haltestift
- 54: Rastmittel / vorstehender Haken
- 56: Gegenrastmittel / Ausnehmung
- 57: Gegenrastmittel / Ausnehmung
- 64: Rastmittel / vorstehendes Rastmittel
- 65: Rastmittel / Rast-Vertiefung
- 66: Rastmittel

## Patentansprüche

1. Verfahren zur Positionierung von Prothesenzähnen (2) in einer Prothesenbasis (1), wobei in den Prothesenzähnen (2) basal jeweils zumindest eine Vertiefung (6, 26, 46, 47) vorgesehen ist und/oder in der Prothesenbasis (1) in der zur okklusalen Richtung weisenden Oberfläche (8) mehrere Vertiefungen (6, 26, 46, 47) vorgesehen sind, wobei die Prothesenzähne (2) mit der Prothesenbasis (1) verbunden werden, indem Stifte (12, 32, 52) in die Vertiefungen (6, 26, 46, 47) eingesteckt werden, wobei
die Stifte (12, 32, 52) basal an den Prothesenzähnen (2) angeordnet sind und/oder in okklusaler Richtung an der Prothesenbasis (1) angeordnet sind und/oder die Stifte (12, 32, 52) als separate Haltestifte (52) mit den Prothesenzähnen (2) und der Prothesenbasis (1) verbunden werden, wobei die Stifte (12, 32, 52) Rastmittel (14, 34, 38, 54, 64, 65, 66) aufweisen, **dadurch gekennzeichnet, dass** die Vertiefungen (6, 26, 46, 47) dazu passende Gegenrastmittel (16, 36, 39, 56, 57) aufweisen, so dass die Stifte (12, 32, 52) beim Einstecken mit den Vertiefungen (6, 26, 46, 47) derart arretieren, dass die Prothesenzähne (2) durch eine mechanische Spannung gegen die Prothesenbasis (1) gezogen werden und mit der Prothesenbasis (1) verbunden werden.

2. Verfahren nach Anspruch 1, **dadurch gekennzeichnet, dass**
beim Einstecken der Stifte (12, 32, 52) in die Vertiefungen (6, 26, 46, 47) die Prothesenzähne (2) ohne Spiel in der Prothesenbasis (1) fixiert werden.

3. Verfahren nach Anspruch 1 oder 2, **dadurch gekennzeichnet, dass**
die Vertiefungen (6, 26, 46, 47) bis auf die Gegenrastmittel (16, 36, 39, 56, 57) zylindrisch sind, bevorzugt bis auf die Gegenrastmittel (16, 36, 39, 56, 57) eine gerade zylindrische Geometrie aufweisen.

4. Verfahren nach einem der vorangehenden Ansprüche, **dadurch gekennzeichnet, dass**
die Vertiefungen (6, 26, 46, 47) und die Stifte (12, 32, 52) zueinander passende Formen aufweisen.

5. Verfahren nach einem der vorangehenden Ansprüche, **dadurch gekennzeichnet, dass**
jeder Stift (12, 32, 52) und jede Vertiefung (6, 26, 46, 47) eine eindeutige Form aufweisen, so dass zu jeder Vertiefung (6, 26, 46, 47) jeweils nur ein Stift (12, 32, 52) passt.

6. Verfahren nach einem der vorangehenden Ansprüche, **dadurch gekennzeichnet, dass**
die Vertiefungen (6, 26, 46, 47) und die Stifte (12, 32, 52) nicht rotationssymmetrisch sind, bevorzugt keine Drehsymmetrieachse aufweisen.

7. Verfahren nach einem der vorangehenden Ansprüche, **dadurch gekennzeichnet, dass**
die Gegenrastmittel (16, 36, 39, 56, 57) an einer seitlichen Mantelfläche der Vertiefungen (6, 26, 46, 47) angeordnet sind und bevorzugt die Rastmittel (14, 34, 38, 54, 64, 65, 66) an einer seitlichen Mantelfläche der Stifte (12, 32, 52) angeordnet sind.

8. Verfahren nach Anspruch 7, **dadurch gekennzeichnet, dass**
die Rastmittel (14, 34, 38, 54, 64, 65, 66) durch Vorsprünge gebildet werden, insbesondere durch Wulste (34), Nuten (38, 65), Kugelabschnitte (14) oder Haken (54, 64, 66) gebildet werden, und die Gegenrastmittel (16, 36, 39, 56, 57) durch Rast-Vertiefungen (16, 36, 56, 57) oder Rast-Vorsprünge (39) gebildet werden, insbesondere durch Nuten (36) oder durch Negativformen (16, 36, 39, 56, 57) der Rastmittel (14, 34, 38, 54, 64, 65, 66).

9. Verfahren nach einem der vorangehenden Ansprüche, **dadurch gekennzeichnet, dass**
die Vertiefungen (6, 26, 46, 47) und/oder die Stifte (12, 32, 52) in der Prothesenbasis (1) in Aufnahmeflächen (10) für die Prothesenzähne (2) angeordnet sind, bevorzugt in Aufnahmevertiefungen (10) für die Prothesenzähne (2) angeordnet sind, wobei die Aufnahmeflächen (10) Negative der basalen Enden (4) der Prothesenzähne (2) bilden.

10. Verfahren nach einem der vorangehenden Ansprüche, **dadurch gekennzeichnet, dass**
die Prothesenzähne (2) zur Passungsprobe lösbar mit der Prothesenbasis (1) verbunden werden.

11. Verfahren nach einem der vorangehenden Ansprüche, **dadurch gekennzeichnet, dass**
die Prothesenbasis (1) und/oder die Prothesenzähne (2) einteilig mit den Vertiefungen (6, 26, 46, 47) oder mit den Vertiefungen (6, 26, 46, 47) und den Stiften (12, 32, 52) mit einem CAD/CAM-Verfahren hergestellt werden.

12. Verfahren nach einem der vorangehenden Ansprüche, **dadurch gekennzeichnet, dass**
der Zwischenraum zwischen den Vertiefungen (6, 26, 46, 47) und den zugehörigen Stiften (12, 32, 52) derart gewählt wird oder derart erzeugt wird, dass eine definierte Menge Klebstoff aufgenommen wird, wenn die Stifte (12, 32, 52) mit den Vertiefungen (6, 26, 46, 47) arretiert sind.

13. Verfahren nach einem der vorangehenden Ansprüche, **dadurch gekennzeichnet, dass**
die Rastmittel (14, 34, 38, 54, 64, 65, 66) an den Stiften (12, 32, 52) und die Gegenrastmittel (16, 36, 39, 56, 57) an den Vertiefungen (6, 26, 46, 47) derart angeordnet sind, dass die Prothesenzähne (2) nur in einer bestimmten Orientierung mit der Prothesenbasis (1) verbunden werden können.

14. Verfahren nach einem der vorangehenden Ansprüche, **dadurch gekennzeichnet, dass**
jeweils ein Stift (32) an den basalen Enden (4) der Prothesenzähnen (2) angeordnet ist und eine Mehrzahl von Vertiefungen (26) in der Prothesenbasis (1) angeordnet sind, wobei bevorzugt Zapfen (14, 66) an den seitlichen Mantelflächen der Stifte (32) als Rastmittel (14, 66) vorgesehen sind und Nuten (36) an den seitlichen Mantelflächen als Gegenrastmittel (36) vorgesehen sind.

15. Verfahren zur Herstellung einer Dentalprothesen, bei dem die Prothesenzähne (2) in der Prothesenbasis (1) mit einem Verfahren nach einem der vorangehenden Ansprüche positioniert werden, **dadurch gekennzeichnet, dass**
die Prothesenzähne (2) mit der Prothesenbasis (1) verklebt werden, gegebenenfalls nach der Passungsprobe.

16. Prothesenzahn (2) zur Umsetzung eines Verfahrens nach einem der vorangehenden Ansprüche, wobei der Prothesenzahn (2) am basalen Ende (4) zumindest einen Stift (12, 32, 52) mit einem Rastmittel (14, 34, 38, 54, 64, 65, 66) oder zumindest eine Vertiefung (6, 26, 46, 47) mit einem Gegenrastmittel (16, 36, 39, 56, 57) aufweist.

17. Prothesenzahn-Satz mit mehreren unterschiedlichen Prothesenzähnen (2) nach Anspruch 16.

18. Prothesenbasis (1) zur Umsetzung eines Verfahrens nach einem der Ansprüche 1 bis 15, wobei die Prothesenbasis (1) in der zur okklusalen Richtung weisenden Oberfläche (8) zumindest einen Stift (12, 32, 52) mit einem Rastmittel (14, 34, 38, 54, 64, 65, 66) und/oder zumindest eine Vertiefung (6, 26, 46, 47) mit einem Gegenrastmittel (16, 36, 39, 56, 57) aufweist, wobei bevorzugt der zumindest eine Stift (12, 32, 52) und/oder die zumindest eine Vertiefung (6, 26, 46, 47) in einer Aufnahmefläche (10) oder in mehreren Aufnahmeflächen (10) für Prothesenzähne (2) angeordnet sind.

## Claims

1. A method for the positioning of prosthetic teeth (2) in a denture base (1), wherein at least one respective recess (6, 26, 46, 47) is provided in the basal side of the prosthetic teeth (2) and/or a plurality of recesses (6, 26, 46, 47) are provided in the denture base (1) in the surface (8) pointing in the occlusal direction, wherein the prosthetic teeth (2) are connected to the denture base (1) by inserting pins (12, 32, 52) into the recesses (6, 26, 46, 47), wherein
the pins (12, 32, 52) are arranged at the basal side of the prosthetic teeth (2) and/or in the occlusal direction on the denture base (1) and/or the pins (12, 32, 52) are connected as separate retaining pins (52) to the prosthetic teeth (2) and the denture base (1), wherein
the pins (12, 32, 52) have engaging means (14, 34, 38, 54, 64, 65, 66)
**characterised in that**
the recesses (6, 26, 46, 47) have corresponding counter engaging means (16, 36, 39, 56, 57), such that, during insertion, the pins (12, 32, 52) lock with the recesses (6, 26, 46, 47) in such a way that the prosthetic teeth (2) are pulled by a mechanical tension against the denture base (1) and connected to the denture base (1).

2. The method according to Claim 1, **characterized in that**
during insertion of the pins (12, 32, 52) into the recesses (6, 26, 46, 47), the prosthetic teeth (2) are fixed in the denture base (1) without any play.

3. The method according to Claim 1 or 2, **characterized in that**
the recesses (6, 26, 46, 47) are cylindrical apart from the counter engaging means (16, 36, 39, 56, 57), and preferably have a straight cylindrical geometry apart from the counter engaging means (16, 36, 39, 56, 57).

4. The method according to any one of the preceding claims, **characterized in that**
the recesses (6, 26, 46, 47) and the pins (12, 32, 52) have forms which fit one another.

5. The method according to any one of the preceding claims, **characterized in that** each pin (12, 32, 52) and each recess (6, 26, 46, 47) has a distinctive form, such that in each case only one pin (12, 32, 52) fits each recess (6, 26, 46, 47).

6. The method according to any one of the preceding claims, **characterized in that** the recesses (6, 26, 46, 47) and the pins (12, 32, 52) are not rotationally symmetrical, and preferably do not exhibit any rotational symmetry axis.

7. The method according to any one of the preceding claims, **characterized in that** the counter engaging means (16, 36, 39, 56, 57) are arranged on a lateral surface of the recesses (6, 26, 46, 47), and the engaging means (14, 34, 38, 54, 64, 65, 66) are preferably arranged on a lateral surface of the pins (12, 32, 52).

8. The method according to Claim 7, **characterized in that**
the engaging means (14, 34, 38, 54, 64, 65, 66) are formed by projections, in particular by beads (34), grooves (38, 65), spherical sections (14) or hooks (54, 64, 66), and the counter engaging means (16, 36, 39, 56, 57) are formed by engagement recesses (16, 36, 56, 57) or engagement projections (39), in particular by grooves (36) or by negative forms (16, 36, 39, 56, 57) of the engaging means (14, 34, 38, 54, 64, 65, 66).

9. The method according to any one of the preceding claims, **characterized in that** the recesses (6, 26, 46, 47) and/or the pins (12, 32, 52) in the denture base (1) are arranged in receiver surfaces (10) for the prosthetic teeth (2), preferably in receiver recesses (10) for the prosthetic teeth (2), wherein the receiver surfaces (10) form negatives of the basal ends (4) of the prosthetic teeth (2).

10. The method according to any one of the preceding claims, **characterized in that** in order to carry out a test fitting, the prosthetic teeth (2) are detachably connected to the denture base (1).

11. The method according to any one of the preceding claims, **characterized in that** the denture base (1) and/or the prosthetic teeth (2) are produced as one piece with the recesses (6, 26, 46, 47) or with the recesses (6, 26, 46, 47) and the pins (12, 32, 52) by means of a CAD/CAM process.

12. The method according to any one of the preceding claims, **characterized in that** the intermediate space between the recesses (6, 26, 46, 47) and the associated pins (12, 32, 52) is selected in such a way, or produced in such a way, that a defined quantity of adhesive is adsorbed when the pins (12, 32, 52) are locked with the recesses (6, 26, 46, 47).

13. The method according to any one of the preceding claims, **characterized in that** the engaging means (14, 34, 38, 54, 64, 65, 66) are arranged at the pins (12, 32, 52) and the counter engaging means (16, 36, 39, 56, 57) are arranged at the recesses (6, 26, 46, 47) in such a way that the prosthetic teeth (2) can only be connected to the denture base (1) in a specific orientation.

14. The method according to any one of the preceding claims, **characterized in that** in each case one pin (32) is arranged at the basal ends (4) of the prosthetic teeth (2), and a plurality of recesses (26) are arranged in the denture base (1), wherein preferably plugs (14, 66) are provided on the lateral surfaces of the pins (32) as engaging means (14, 66) and grooves (36) are provided on the lateral surfaces as counter engaging means (36).

15. A method for producing a dental prosthesis, in which the prosthetic teeth (2) are positioned in the denture base (1) by means of a method according to any one of the preceding claims, **characterized in that**
the prosthetic teeth (2) are adhesively bonded to the denture base (1), optionally after the test fitting.

16. A prosthetic tooth (2) for the implementation of a method according to any one of the preceding claims, wherein the prosthetic tooth (2) comprises at the basal end (4) at least one pin (12, 32, 52) with an engaging means (14, 34, 38, 54, 64, 65, 66) or at least one recess (6, 26, 46, 47) with a counter engaging means (16, 36, 39, 56, 57).

17. A set of prosthetic teeth with a plurality of different prosthetic teeth (2) according to Claim 16.

18. A denture base (1) for the implementation of a method according to any one of Claims 1 to 15, wherein the denture base (1) comprises, in the surface (8) pointing in the occlusal direction, at least one pin (12, 32, 52) with an engaging means (14, 34, 38, 54, 64, 65, 66) and/or at least one recess (6, 26, 46, 47) with a counter engaging means (16, 36, 39, 56, 57), wherein preferably the at least one pin (12, 32, 52) and/or the at least one recess (6, 26, 46, 47) are arranged in a receiver surface (10) or in a plurality of receiver surfaces (10) for prosthetic teeth (2).

## Revendications

1. Procédé de positionnement de dents prothétiques (2) dans une base de prothèse (1), dans lequel respectivement au moins une cavité (6, 26, 46, 47) est prévue à la base dans les dents prothétiques (2), et/ou plusieurs cavités (6, 26, 46, 47) sont prévues dans la base de prothèse (1) dans la surface (8) orientée vers la direction occlusale, où les dents prothétiques (2) sont reliées avec la base de prothèse (1) en ce que des broches (12, 32, 52) sont plantées dans les cavités (6, 26, 46, 47), où
les broches (12, 32, 52) sont disposées à la base sur les dents prothétiques (2), et/ou sont disposées sur la base de prothèse (1) dans la direction occlusale, et/ou les broches (12, 32, 52) sont reliées avec les dents prothétiques (2) et la base de prothèse (1) sous forme de broches de maintien (52) séparées, où les broches (12, 32, 52) présentent des moyens de retenue (14, 34, 38, 54, 64, 65, 66), **caractérisé en ce que** les cavités (6, 26, 46, 47) présentent des moyens de retenue complémentaires (16, 36, 39, 56, 57) de sorte que les broches (12, 32, 52) se verrouillent lors de l'insertion avec les cavités (6, 26, 46, 47) de telle manière que les dents prothétiques (2) sont tirées par une tension mécanique contre la base de prothèse (1) et sont reliées avec la base de prothèse (1).

2. Procédé selon la revendication 1, **caractérisé en ce que**
lors de l'insertion des broches (12, 32, 52) dans les cavités (6, 26, 46, 47), les dents prothétiques (2) sont fixées sans jeu dans la base de prothèse (1).

3. Procédé selon la revendication 1 ou la revendication 2, **caractérisé en ce que** les cavités (6, 26, 46, 47) sont cylindriques jusqu'au niveau des moyens de retenue complémentaires (16, 36, 39, 56, 57), de préférence, présentent une géométrie cylindrique droite jusqu'au niveau des moyens de retenue complémentaires (16, 36, 39, 56, 57).

4. Procédé selon l'une des revendications précédentes, **caractérisé en ce que** les cavités (6, 26, 46, 47) et les broches (12, 32, 52) présentent des formes qui se complètent.

5. Procédé selon l'une des revendications précédentes, **caractérisé en ce que** chaque broche (12, 32, 52) et chaque cavité (6, 26, 46, 47) présentent une forme précise de sorte qu'une seule broche (12, 32, 52) correspond respectivement à chaque cavité (6, 26, 46, 47).

6. Procédé selon l'une des revendications précédentes, **caractérisé en ce que**
les cavités (6, 26, 46, 47) et les broches (12, 32, 52) ne sont pas symétriques en rotation, ne présentent de préférence pas d'axe de symétrie de rotation.

7. Procédé selon l'une des revendications précédentes, **caractérisé en ce que**
les moyens de retenue complémentaires (16, 36, 39, 56, 57) sont disposés au niveau d'une surface d'enveloppe latérale des cavités (6, 26, 46, 47) et les moyens de retenue (14, 34, 38, 54, 64, 65, 66) sont de préférence disposés au niveau d'une surface d'enveloppe latérale des broches (12, 32, 52).

8. Procédé selon la revendication 7, **caractérisé en ce que**
les moyens de retenue (14, 34, 38, 54, 64, 65, 66) sont formés par des protubérances, en particulier par des renflements (34), des rainures (38, 65), des segments sphériques (14) ou des crochets (54, 64, 66), et les moyens de retenue complémentaires (16, 36, 39, 56, 57) sont formés par des renfoncements de retenue (16, 36, 56, 57) ou des protubérances de retenue (39), notamment par des rainures (36) ou des formes négatives (16, 36, 39, 56, 57) des moyens de retenue (14, 34, 38, 54, 64, 65, 66).

9. Procédé selon l'une des revendications précédentes, **caractérisé en ce que**
les cavités (6, 26, 46, 47) et/ou les broches (12, 32, 52) dans la base de prothèse (1) sont disposées dans des surfaces de réception (10) pour les dents prothétiques (2), de préférence, sont disposées dans des cavités de réception (10) pour les dents prothétiques (2), où les surfaces de réception (10) forment des négatifs des extrémités basales (4) des dents prothétiques (2).

10. Procédé selon l'une des revendications précédentes, **caractérisé en ce que**
les dents prothétiques (2) sont reliées de manière amovible avec la base de prothèse (1) pour l'essai d'ajustement.

11. Procédé selon l'une des revendications précédentes, **caractérisé en ce que** la base de prothèse (1) et/ou les dents prothétiques (2) sont fabriquées d'un seul tenant avec les cavités (6, 26, 46, 47), ou avec les cavités (6, 26, 46, 47) et les broches (12, 32, 52) avec un procédé CAD/CAM.

12. Procédé selon l'une des revendications précédentes, **caractérisé en ce que** l'espace intermédiaire entre les cavités (6, 26, 46, 47) et les broches (12, 32, 52) correspondantes est choisi de telle manière ou est créé de telle manière qu'une quantité définie d'adhésif est absorbée lorsque les broches (12, 32, 52) sont verrouillées avec les cavités (6, 26, 46, 47).

13. Procédé selon l'une des revendications précédentes, **caractérisé en ce que**
les moyens de retenue (14, 34, 38, 54, 64, 65, 66) sont disposés sur les broches (12, 32, 52) et les moyens de retenue complémentaires (16, 36, 39, 56, 57) sur les cavités (6, 26, 46, 47) de telle manière que les dents prothétiques (2) ne peuvent être reliées que dans une orientation déterminée avec la base de prothèse (1).

14. Procédé selon l'une des revendications précédentes, **caractérisé en ce que** respectivement une broche (32) est disposée aux extrémités basales (4) des dents prothétiques (2) et une multiplicité de cavités (26) est disposée dans la base de prothèse (1), où de préférence des obturateurs (14, 66) sont prévus sur les surfaces d'enveloppe des broches (32) en tant que moyens de retenue (14, 66) et des rainures (36) sont prévues sur les surfaces d'enveloppe latérales en tant que moyens de retenue complémentaires (36).

15. Procédé de fabrication d'une prothèse dentaire, dans lequel les dents prothétiques (2) sont positionnées dans la base de prothèse (1) avec un procédé selon l'une des revendications précédentes, **caractérisé en ce que** les dents prothétiques (2) sont collées avec la base de prothèse (1), éventuellement après l'essai d'ajustement.

16. Dent prothétique (2) permettant la réalisation d'un procédé selon l'une des revendications précédentes, où la dent prothétique (2) présente à l'extrémité basale (4) au moins une broche (12, 32, 52) avec un moyen de retenue (14, 34, 38, 54, 64, 65, 66) ou au moins une cavité (6, 26, 46, 47) avec un moyen de retenue complémentaire (16, 36, 39, 56, 57).

17. Ensemble de dents prothétiques avec plusieurs dents prothétiques (2) différentes selon la revendication 16.

18. Base de prothèse (1) permettant la réalisation d'un procédé selon l'une des revendications 1 à 15, où la base de prothèse (1) présente au moins une broche (12, 32, 52) avec un moyen de retenue (14, 34, 38, 54, 64, 65, 66) dans la surface (8) orientée dans la direction occlusale et/ou au moins une cavité (6, 26, 46, 47) avec un moyen de retenue complémentaire (16, 36, 39, 56, 57), où, de préférence, l'au moins une broche (12, 32, 52) et/ou l'au moins une cavité (6, 26, 46, 47) sont disposées dans une surface de réception (10) ou dans plusieurs surfaces de réception (10) pour dents prothétiques (2).
